Europäisches Patentamt

**European Patent Office**

Office européen des brevets

(11) Publication number: **0 280 566**
**A2**

## EUROPEAN PATENT APPLICATION

(21) Application number: **88301665.1**

(22) Date of filing: **26.02.88**

(51) Int. Cl.⁴: **G 02 C 11/02**

(30) Priority: **27.02.87 GB 8704656**

(43) Date of publication of application:
**31.08.88 Bulletin 88/35**

(84) Designated Contracting States: **DE ES FR GB IT**

(71) Applicant: **Chappell, Norman William**
**95 Hainault Road**
**Chigwell Essex (GB)**

(72) Inventor: **Chappell, Norman William**
**95 Hainault Road**
**Chigwell Essex (GB)**

(74) Representative: **Daley, Michael John et al**
**F.J. CLEVELAND & COMPANY 40/43 Chancery Lane**
**London, WC2A 1JQ (GB)**

(54) **Spectacle frames.**

(57) A spectacle frame (10) having a removable decorative component (21) located in a groove (19) formed in the spectacle frame (10), which groove (19) tapers outwardly from the surface (16) of the frame (10) in transverse cross-section. The decorative component (21) including an elongate spigot (20) having a dove-tailed cross-section complimentary to that of the groove (19) and arranged to engage in the groove (19), and a further portion (21), which is of greater length and width than the groove opening (19).

FIG.2

# Description

## SPECTACLE FRAME

This invention relates to spectacle frames and, more particularly, to a spectacle frame having a decorative component.

It is known to provide a spectacle frame with a removable decorative component. It is also known to provide a selection of different decorative components, each adapted to co-operate with a spectacle frame so that any selected one of such components may be removably attached to the frame and subsequently substituted, if required, by any other of the components.

In known arrangements the decorative component is held in engagement with an associated spectacle frame by the engagement of the decorative component in a recess, or groove formed in the frame. Where the decorative component is itself elongate, the groove is typically of the same length and breadth as the decorative compartment. Hence the groove is often visible, detracting from the appearance of the spectacle frame. Such a spectacle frame is described in British Patent No. 2,159,174.

According to the present invention, there is provided a spectacle frame having a removable decorative component located in a groove formed in the spectacle frame, which groove tapers outwardly from the surface of the frame in transverse cross-section, characterised in that the decorative component includes an elongate spigot having a dove-tailed cross-section complimentary to that of the groove and arranged to engage in the groove, and a further portion, which is of greater length and width than the groove opening.

In an embodiment, the enlongate spigot is formed from a material of sufficient resilience to render the spigot insertable into the groove through resilient deformation of the spigot. Preferably, the groove is located on the front face of the frame and the decorative component is arranged to cover a portion of said front face.

Also according to the present invention, there is provided a decorative component adapted to engage the groove of a spectacle frame in accordance with the invention.

It should be noted that the term spectacle frame encompasses within its ambit both pairs of spectacles complete with lenses and frames alone.

A specific embodiment of the present invention will now be described by way of example only and with reference to the accompanying drawings.

In the drawings:-

FIGURE 1 is a perspective view of an embodiment of a spectacle frame in accordance with the present invention,

FIGURE 2 is a section on X-X' of a portion of the frame shown in Figure 1, and

FIGURE 3 is a front elevation of the spectacle frame of Figure 1, but without a decorative component.

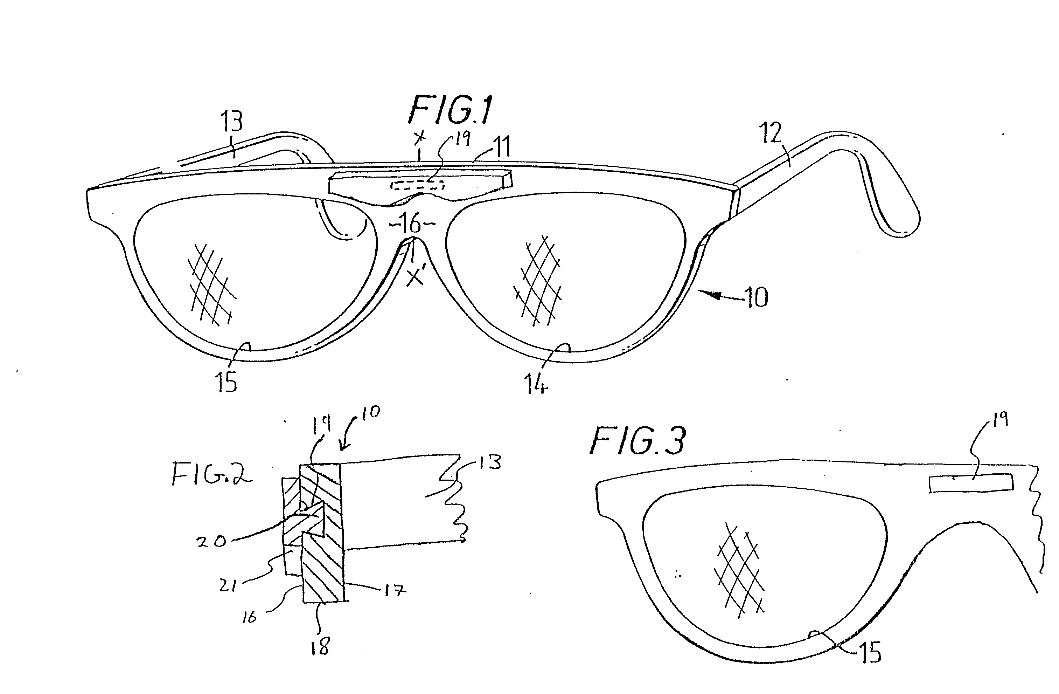

Referring now to Figures 1 and 2 of the drawings, there is shown a spectacle frame 10 comprising a lens carrying member 11 and a pair of side members 12, 13, an end pcrtion of each of which is pivotally connected to a corresponding end portion of the lens carrying member 11.

The lens carrying member 11 comprises a pair of apertures 14, 15 each for receiving one of a pair of corresponding lenses. The member 11 comprises a substrate having a front surface 16, a rear surface 17 and a circumferential surface 18.

The front surface 16 is provided with an elongate undercut grocve 19 extending longitudinally of the member 11. The undercut groove 19 tapers outwardly from the surface 16 in transverse cross-section (see Figure 2).

The undercut groove 19 has inserted therein a dovetail cross-sectioned spigot 20 of resilient material, the spigot 20 extending longitudinally of the recess 19. The spigot 20 forms an integral part of a decorative member 21 which extends across the front surface 16 of the lens carrying member 11. The extent of the decorative member 21 is such that it entirely covers up the mouth of the undercut groove 20. The complimentary cross-sections of the groove 19 and the spigot 20 ensure that, once inserted in the groove 19, the spigot 20 is retained therein and is unlikely to be accidently dislodged. However, the resilience of the spigot 20 allows the latter to be inserted or removed by deliberate ation, to allow the removal and replacement of the decorative member 21.

It will be appreciated that the decorative member 21 may be of a colour different from the colour of the lens carrying member 11 or, at least, the front surface 16 thereof. Additionally decorative members of differing shapes and colours may be substituted for that shown at 21.

It will also be appreciated that the under cut groove 19 may be located elsewhere on the surface of the lens carrying member 11, or side members 12 and 13, to thereby allow the fitment of decorative members to alternative parts of the spectacle frame.

## Claims

1. A spectacle frame (10) having a removable decorative component (21) located in a groove (19) formed in the spectacle frame (10), which groove (19) tapers outwardly from the surface of the frame (10) in transverse cross-section, characterised in that the decorative component (21) includes an elongate spigot (20) having a dove-tailed cross-section complimentary to that of the groove (19) and arranged to engage in the groove (19), and a further portion (21), which is of greater length and width than the groove opening (19).

2. A spectacle frame (10) as claimed in claim 1, characterised in that the elongate spigot (20) is formed from a material of sufficient resilience to render the spigot (20) insertable into the groove (19), through resilient deformation of the spigot (20).

3. A spectacle frame (10) as claimed in claim 2, characterised in that the groove (19) is located on the front face (16) of the frame (10) and the decorative component (21) is arranged to cover a portion of said front face (16).

4. A decorative component (21) characterised by being adapted to engage the groove of a spectacle frame (10) as claimed in any one of claims 1-3.

0280566

FIG.1

FIG.2

FIG.3